# EUROPEAN PATENT SPECIFICATION

(11) **EP 0 884 457 B1**
(45) Date of publication and mention of the grant of the patent: **03.09.2003**
(21) Application number: 98110457.3
(22) Date of filing: 08.06.1998
(51) Int. Cl.: F01N 3/02, F01N 3/08, B01D 46/00, B01D 53/94, C04B 38/00, B01D 39/20

(54) **Particulate filter**
Teilchenfilter
Filtre de particules

(30) Priority: 12.06.1997 JP 17289797
(43) Date of publication of application: 16.12.1998
(73) Proprietor: Kabushiki Kaisha Toyota Chuo Kenkyusho, Aichi-gun, Aichi-ken, 480-1192 (JP)
(72) Inventor: Mitsuru, Asai, K.K. Toyota Chuo Kenkyusho, Aichi-gun, Aichi-ken, 480-1192 (JP); Nobuo, Kamiya, K.K. Toyota Chuo Kenkyusho, Aichi-gun, Aichi-ken, 480-1192 (JP); Hiroshi, Hohjo, K.K. Toyota Chuo Kenkyusho, Aichi-gun, Aichi-ken, 480-1192 (JP); Koichiro, Yamamoto, K.K. Toyota Chuo Kenkyusho, Aichi-gun, Aichi-ken, 480-1192 (JP)
(74) Representative: Blumbach, Kramer & Partner GbR

(56) References cited:
- EP-A- 0 360 593
- EP-A- 0 661 088
- EP-A- 0 761 279
- US-A- 4 965 101
- US-A- 5 634 952
- PATENT ABSTRACTS OF JAPAN vol. 012, no. 209 (C-504), 15 June 1988 & JP 63 007814 A (IBIDEN CO LTD), 13 January 1988

## Description

### BACKGROUND OF THE INVENTION

### 1. Field of the Invention

The present invention relates to a particulate filter, and more specifically, to a particulate filter for trapping particulates contained in exhaust gas from diesel engines and automobile engines into an exhaust system, and incinerating and removing the particulates.

### 2. Description of Related Art

Exhaust gas from diesel engines and automobile engines contain particulates formed of soot, hydrocarbons deposited on soot, sulfates and metallic oxides and the like. The particulates are contained at a higher level, particularly in exhaust gas from diesel engines, and it is said that these particulates are generated through the decomposition or incomplete combustion of fuel in a high temperature region in less air.

So as to trap such particulates in the exhaust system of the exhaust gas, therefore, a variety of particulate filters have been proposed. For instance, these filters are broadly grouped by the materials as ceramic materials and metal materials. Furthermore, the ceramic materials are divided as honeycomb filter, foam filter and fiber filter, depending on the shape.

Because the honeycomb filter comprising ceramic materials such as cordierite and silicon carbide has excellent heat resistance and thermal shock resistance, the filter has been drawing attention as a particulate filter for diesel engines and automobile engines used under severe conditions.

The honeycomb filter is produced by extrusion molding a ceramic material into a honeycomb shape and cutting the material into a given length. There are a great number of cells formed in a base material composing the principal part of the honeycomb filter, individual cells being structurally partitioned through partition walls of a thin thickness. Furthermore, the honeycomb filter is divided as straight flow type for use at a state such that both ends of the cells are opened and wall flow type for use at a state such that the cell openings and cell outlets are alternately sealed together.

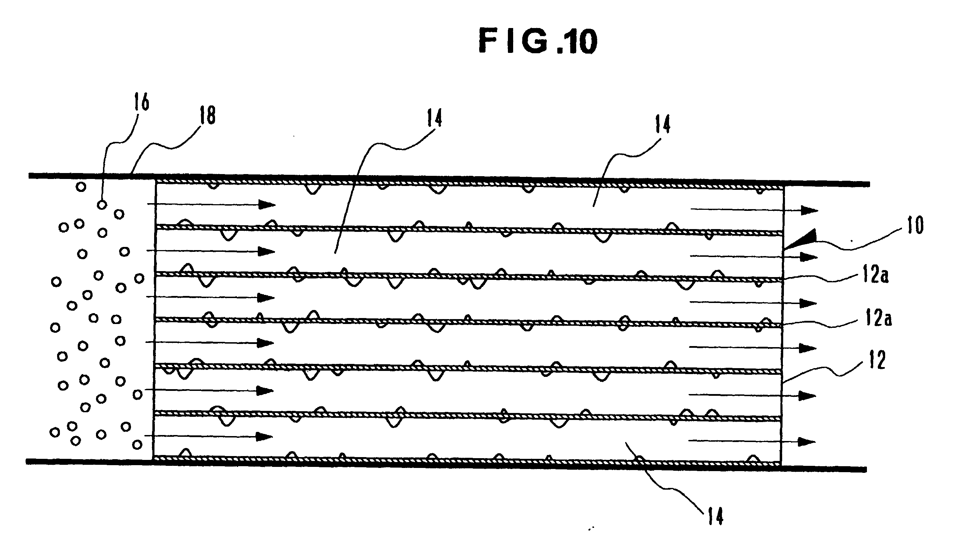

Fig. 10 is a cross sectional view depicting the state of honeycomb filter 10 of straight flow type arranged in exhaust gas passage 18. When exhaust gas containing particulates 16 flows in the passage at that state, the particulates 16 are in contact to partition walls 12a as parts of the base material 12 while the exhaust gas flows through the cells 14 formed in the base material 12, whereby the particulates are trapped on the surface of the partition walls 12a.

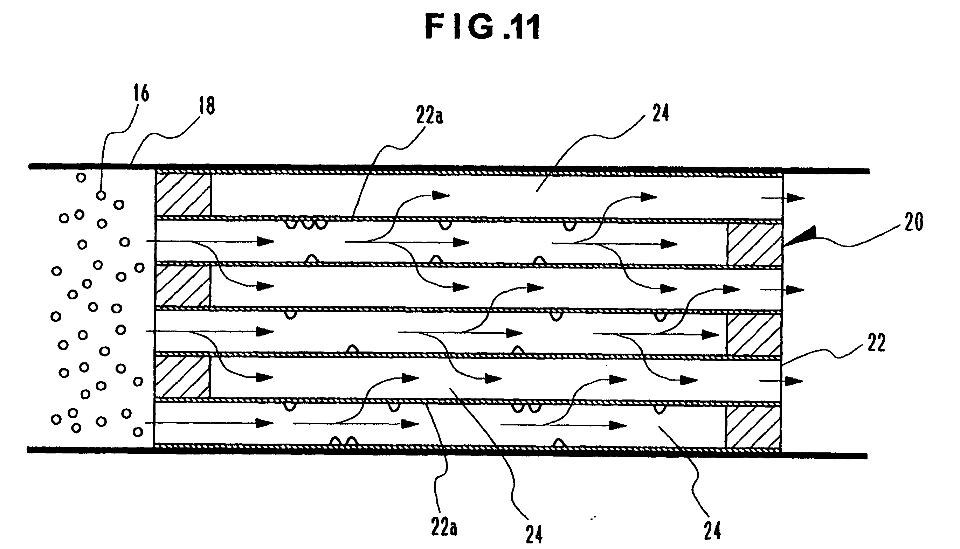

Herein, Fig. 11 is a cross sectional view depicting the state of honeycomb filter 20 of wall flow type arranged in the exhaust gas passage 18. Because the base material 22 of the filter of wall flow type is composed of a porous material, the exhaust gas containing particulates 16 flowing in the passage at that state permeates through the partition walls 22a of the cells 24, whereby the particulates 16 are trapped on the surface of the partition walls 22a and in the pores inside the partition walls 22a.

The trapping efficiency and pressure loss of the honeycomb filter of wall flow type depends on the pore diameter of the base material. If the pore diameter of the base material is too small, more specifically, the trapping efficiency of such particulates is increased, but the pressure loss is enlarged when exhaust gas permeates through the partition walls. If the pore diameter is too large, adversely, the pressure loss is small but the trapping efficiency of particulates is decreased. Therefore, in general, an appropriate pore diameter and an appropriate distribution of pore diameters should be selected.

A variety of methods for controlling the pore diameter of the base material of honeycomb filter and the distribution of pore diameters thereof have been known. For example, Japanese Patent Laid-Open No. Hei 5-23512 discloses a technique for producing a diesel particulate filter of a pore diameter of 1 to 15 µm and with a standard deviation of the pore diameter distribution below 0.20, comprising adding β type silicon carbide powder of an average particle size of 0.3 µm into α type silicon carbide powder of an average particle size of 11 µm and sintering the resulting mixture under given conditions.

Additionally, Japanese Patent Laid-Open No. Hei 5-139861 discloses a technique for producing a porous sintered body of silicon carbide of a pore diameter of 1 to 60 µm, comprising mixing into β type having a mean particle diameter of 0.1 µm, α type silicon carbide powder of a particle size of 0.5 to 100 µm larger than the pore diameter of β type silicon carbide powder and sintering the mixture at a given temperature.

It is furthermore required that the particulates trapped on the particulate filter are removed from the filter at a stage when a given amount thereof is trapped thereon, to regenerate the particulate filter. Because most of the trapped particulates are combustible matters such as soot, generally, the particulate filter is generally regenerated, by incinerating and then removing the particulates.

As a regeneration means of the particulate filter, specifically, there has been known a process of incinerating and removing particulates trapped on the particulate filter by means of an electric heater or burner while air is blown on the filter during the switch off of the engine (see Japanese Patent Laid-Open No. Hei 7-133713).

Also, a process of incinerating and removing particulates has been known, comprising increasing the contact area between particulates and a base material by appropriately controlling the pore diameter of a particulate filter and the distribution of pore diameters and incinerating the particulates trapped on the base material in oxygen remaining in the exhaust gas at a relative low temperature without flame, when the exhaust gas temperature of the engine reaches a given level, whereby the particulates are removed.

The former process, however, is disadvantageous in that the catch fire temperature and average combustion temperature of particulates are higher, which melt and damage the base material of a particulate filter such as cordierite or crack the material. Currently, therefore, the process is not practically used as a particulate filter for automobiles.

Alternatively, the latter process is advantageous in that no melting or damage of the base material occurs because the deposited particulates are incinerated at relative low temperatures whereby the particulates are removed. When the temperature of exhaust gas is low, for example during engine start, low-speed operation, and operation with a small load, disadvantageously, the combustion of the particulates does not progress.

When a honeycomb filter of for example straight flow type is used as particulate filter, therefore, particulates generated during engine start and the like are deposited thickly inside the inner wall areas of the cells, so that these cells are occluded, which causes the increase of pressure loss, or particulates escaping from the process of trapping are discharged, as they are, out of the engine, disadvantageously.

When a honeycomb filter of for example wall flow type is used as a particulate filter, the deposition of particulates in a layer on the surface of a base material causes the clogging of the base material, if the pore diameter of the base material is too small. Hence, the pressure loss is increased. So as to avoid this, the pore diameter should be increased, but then, the trapping efficiency of particulates is decreased. Because the contact area between particulates and the base material is small, then, the combustion efficiency is decreased, which causes difficulty in the cleanup of particulates, disadvantageously. Therefore, no filters with satisfactory performance have been produced according to conventional processes of simply controlling the pore diameter and the like.

EP-A-0 761 279 discloses a honeycomb structure having a porous cell wall with a surface roughness of at least 30 µm, a mean diameter of pores from 10 to 40 µm and a porosity of the cell wall of at least 40 %. The honeycomb structure can be made from alumina, cordierite, mullite, silicon nitride or aluminum nitride.

US-A-4,965,101 discloses a foam filter in which the surface of pores which is mentioned as a porosity in the range of 30 to 80 pores per linear inch in its specification, corresponding to a pore diameter of 318 to 850 µm, is roughened using a chemical vapor deposition (CVD method) or by deposition of particles. The foam filter has a three-dimensional network skeleton structure, which is different from the structure of the inventive filter. A peak-to-peak interval between particles with which the three-dimensional network skeleton is coated, is 1 to 100 µm.

JP-A-63007814 discloses a pure fine filter for filtration of liquid containing many particles in a suspension. D3 aims to easily remove cake consisting of particles deposited on the surface of the filter, which is quite different from the invention.

### SUMMARY OF THE INVENTION

The present invention has been made in view of the above circumstances and has an object to overcome the above problems and to provide a particulate filter, having less pressure loss and excellent particulate trapping efficiency and being capable of incinerating trapped particulates at high efficiency without flame even when the temperature of exhaust gas is low, for example during engine start.

A solution on this object is achieved with a particulate filter according to claim 1.

Subclaims 2 to 6 are directed towards advantageous embodiments of the inventive filter.

Claims 7 to 9 are directed towards methods of producing the inventive filter.

The particulate filter of the present invention for trapping particulates in exhaust gas and incinerating and removing the particulates, comprises a base material with mean surface roughness Rz in the range of 30 to 1,000 µm.

When the mean surface roughness Rz of the base material composing the particulate filter is 30 to 1,000 µm and given projections and recesses are formed on the surface of the base material, turbulence occurs in the flow of exhaust gas flowing in the proximity of the surface of the base material when exhaust gas flows through the particulate filter, so that the contact frequency between particulates and the base material is increased. Thus, the trapping efficiency of particulates is improved, compared with the case when the surface of the base material is fabricated as a flat area.

Due to the increase in the contact area between particulates and the surface of the base material, the particulates are more readily incinerated, so that the catch fire temperature of the particulates is lowered. Even when the temperature of exhaust gas is low for example during engine start, therefore, the combustion of particulates progresses, to cleanup the exhaust gas.

In the particulate filter, a plurality of trap chambers and connecting pores communicating between the trap chambers are arranged in the base material. When a plurality of trap chambers and connecting pores communicating between the trap chambers are arranged inside the base material, the particulates contained in exhaust gas are transferred from one trap chamber through the connecting pores to the next trap chamber when the exhaust gas passes through the particulate filter.

The particulates never trapped on the surface of the base material are then sequentially trapped into the trap chambers arranged inside the base material, so that particulates reaching the side of the outlet of the particulate filter decrease considerably. Because the surface area to trap particulates is enlarged, the increase of the pressure loss due to the clogging of the base material is unlikely to occur. Because the contact area between particulates and the base material is increased, furthermore, the catch fire temperature of particulates is lowered, whereby the combustion efficiency is improved.

In the particulate filter, furthermore, a heat insulating layer is preferably arranged at least on a part of the surface of the base material. Because the scattering of the heat generated through the combustion of particulates is prevented if such heat insulating layer is arranged at least on a part of the surface of the base material, the catch fire temperature of the particulates can further be reduced, involving the improvement of the combustion efficiency.

Herein, the heat insulating layer is effectively arranged, so that the part serving as an combustion reaction area of particulates might be insulated thermally. More specifically, a heat insulating layer is preferably arranged on the recess parts on the surface of the base material with the mean surface roughness Rz predetermined. Additionally, the wall area inside the trap chambers formed inside the base material corresponds to the "surface of the base material", and therefore, the heat insulating layer may satisfactorily be arranged on the wall area. For honeycomb filters of wall flow type, in particular, a heat insulating layer with a higher porosity than the porosity on the gas inlet part is satisfactorily arranged on the gas outlet part of the base material.

If an oxidation catalyst, a precious metal catalyst or the like is loaded on the surface of the base material of the particulate filter thus structured, the wall area inside the trap chambers formed inside the base material, or the surface of the heat insulating layer formed on the surface of the base material, additionally, the catch fire temperature of particulates can be lowered further. If an NOx reduction catalyst, an NOx adsorption, a material for controlling thermal performance and the like are loaded thereon, in addition to the oxidation catalyst or a precious metal catalyst, not only the combustion efficiency of particulates can be improved but also the reduction of NOx is realized.

As the oxidation catalyst, more specifically, a single phase of CeO₂, Fe₂O₃, Pr₂O₃, Pr₆O₁₁ or the like or plural phases thereof may be employed. As the noble metal catalyst, additionally, a single phase of platinum, palladium, rhodium, iridium or the like or plural phases thereof may be employed. Further, complex catalysts of the oxidation catalyst of a single phase or plural phases thereof and the precious metal catalyst of a single phase or plural phases may satisfactorily be employed.

According to the present invention, the mean surface roughness Rz of the base material of the particulate filter of the present invention is 30 to 1,000 µm, the particulates in exhaust gas are trapped in the recess parts on the surface of the base material, so that the trapping efficiency of the particulates can effectively be improved. Because the mean surface roughness Rz of the base material is set within a given range, the increase of the pressure loss can effectively be suppressed, while the trapping efficiency and combustion efficiency of particulates can be maintained at higher levels.

Because the contact frequency between particulates and the base material is increased if plural trapping chambers and connecting pores communicating between the trapping chambers are arranged inside the base material, the combustion efficiency of the particulate filter can effectively be increased. Because the trapping area of particulates is increased and the base material is unlikely to be clogged, the trapping efficiency can be improved effectively, with no increase of the pressure loss.

If a heat insulating layer is arranged on a part of the surface of the base material, for example, the recess parts formed on the surface of the base material, the wall area inside the trapping chambers, or the gas outlet part of the base material, the recess parts on the surface of the base material, working as an combustion reaction area of particulates or the inside of the trapping chambers, are thermally insulated, so that the combustion efficiency of particulates can be improved effectively.

As described above, because the particulate filter of the present invention can trap particulates in exhaust gas at higher efficiency irrespective of the filter shape and because particulates in exhaust gas can be incinerated without flame at a relatively low temperature region, a vast amount of particulates generated at a low temperature of exhaust gas, for example during engine start or engine operation with a small load, can be incinerated and removed if the filter of the present invention is used as a particulate filter for diesel engine; and additionally, the cleanup of NOx and the like can be done. Hence, the filter is an invention with industrially remarkable effects.

### BRIEF DESCRIPTION OF THE DRAWINGS

Fig. 1 shows graphs depicting the relation between the mean surface roughness of the base material and the combustion performance of soot;
Fig. 2 shows bar graphs depicting the relation of the mean surface roughness and the presence or absence of any oxidation catalyst with the level of CO + CO₂ at an inlet gas temperature of 400 °C.
Fig. 3 is a partial cross sectional view of a particulate filter with trapping chambers and connecting pores;
Fig. 4(a) - Fig. 4(c) are schemes depicting the process of forming connecting pores inside the base material comprising cordierite, by using crude large talc;
Fig. 5(a) - Fig. 5(c) are schemes depicting the process of forming connecting pores inside the base material comprising cordierite, by using a granulation powder composed of alumina and kaolin;
Fig. 6 shows graphs depicting the combustion performance of soot in a particulate filter with trapping chambers and connecting pores and in a particulate filter without trapping chambers or connecting pores;
Fig. 7 is a partial cross sectional view of a filter coated with a heat insulating material;
Fig. 8 is a partial cross sectional view of a filter with a layer with a high porosity, formed thereon;
Fig. 9 shows bar graphs of catch fire temperatures of the heat insulating material-coated filter shown in Fig. 7 and the filter with a layer of a high porosity, formed thereon shown in Fig. 8, and the filter never coated with any heat insulating material;
Fig. 10 is a cross sectional view depicting the particulate filter of straight flow type for conventional use, which is at a state in use; and
Fig. 11 is a cross sectional view depicting the particulate filter of wall flow type for conventional use, which is at a state in use.

### DETAILED DESCRIPTION OF THE PREFERRED EMBODIMENTS

A detailed description of one preferred embodiment of the particulate filter embodying the present invention will now be given, referring to the accompanying drawings.

The reason why the mean surface roughness Rz of the base material in the particulate filter of the present invention is limited to 30 to 1,000 µm is as follows.

If the mean surface roughness Rz of the base material is less than 30 µm, more specifically, the particulate trapping efficiency of a honeycomb filter of for example straight flow type is lowered. If the mean surface roughness Rz is too small, less turbulence in the flow of exhaust gas occurs when exhaust gas passes in the proximity of the partition walls of the cells formed inside the base material, involving the reduction of the frequency of the particulates in contact with the base material.

A honeycomb filter of wall flow type is clogged, to cause the increase in pressure loss. If the mean surface roughness Rz of the base material is too small, most of particulates are trapped on the surface of the partition walls when exhaust gas permeates through the partition walls, so that particulates are deposited in layers on the surface of the partition walls.

If the mean surface roughness Rz of the base material is above 1,000 µm, there is a problem in the straight flow type that decreased open area of the cells results in the increase of pressure loss. It is also difficult in case of a honeycomb filter of wall flow type to form the recesses and projections on the surface of the base material without increasing the pressure loss.

Based on the aforementioned reasons, the mean surface roughness Rz of the base material is required to be 30 to 1,000 µm. The trapping efficiency and combustion efficiency of particulates are likely to be improved at a larger mean surface roughness Rz of a honeycomb filter of straight flow type. However, the means surface roughness Rz is too small, the trapping efficiency is abruptly decreased and the catch fire temperature is risen. However, the pressure loss of particulates is increased if the mean surface roughness Rz is too large. Taking account of them, the mean surface roughness Rz of the base material is particularly preferably within a range of 170 to 700 µm, so as to produce a particulate filter of straight flow type, with higher trapping efficiency and greater combustion efficiency and with a smaller pressure loss.

The material of the base material composing the particulate filter and the shape of the filter are not specifically limited. For example, various materials including ceramic materials such as cordierite, silicon carbide, silicon nitride and mullite, and metal materials may be employed. The shape of the base material may satisfactorily be any of honeycomb filter, foam filter and fiber filter. Additionally, a catalyst may satisfactorily be loaded on the surface of the base material.

If the base material is prepared into a honeycomb shape of straight flow type, furthermore, the base material may satisfactorily be composed of any of dense materials or porous materials. If the base material is prepared into a honeycomb shape of wall flow type, additionally, no limitation is imposed to the material, except for the mean surface roughness Rz within the aforementioned range. Depending on the environment where the filter is used, the porosity, mean pore diameter and pore diameter distribution of the base material may appropriately be selected.

The processes of trapping and incinerating particulates by means of a particulate filter with a given surface roughness on the surface of the base material are now described. When exhaust gas containing particulates flows in a exhaust gas passage arranged with a particulate filter of for example straight flow type and with given mean surface roughness Rz, exhaust gas passes through the inside of the cells partitioned with the partition walls. In a particulate filter of wall flow type, exhaust gas permeates through the inside of the partition walls from the gas inlet side toward the gas outlet side.

When the mean surface roughness Rz is 30 to 1,000 µm and recesses and projections are formed on the surface of a base material, in a corresponding manner to the surface roughness, then, turbulence develops in the flow of exhaust gas when the gas passes in the proximity of the surface of the partition walls as parts of the base material or passes through the partition walls, so that the frequency of particulates contained in the exhaust gas in contact with the surface of the base material is increased. Therefore, the trapping efficiency of particulates is improved on the surface of the base material, compared with the base material surface which is a flat area.

Through the increase of the area of particulates in contact with the surface of the base material, particulates are more readily incinerated, so that the catch fire temperature of particulates is lowered. Accordingly, exhaust gas can be cleaned up, even if the exhaust gas temperature is low, for example during engine start. Because the combustion of particulates progresses, starting from the low temperature region, furthermore, cell occlusion or the clogging of the base material hardly occurs, which suppresses the increase of pressure loss.

A method for producing a particulate filter of a base material with mean surface roughness Rz of 30 to 1,000 µm is described below. A variety of processes may be employed as the method for preparing a particulate filter of mean surface roughness Rz within the aforementioned range. When ceramic materials are used as the base material, for example, preference is given to a process of adding pore forming materials to a raw material powder or a process of coating slurry containing crude large materials on the surface of the base material.

The production of a particulate filter by the process of adding pore forming materials to a raw material powder (referred to as "process A" hereinbelow) is carried out specifically by the following procedures. More specifically, a combustible pore forming material comprising graphite granules, carbon black, resin particles, and the like, individually having given grain sizes, is firstly added, together with a binder, to raw material ceramic powder such as cordierite and silicon carbide, and they are mixed and kneaded together uniformly. Then, the kneaded raw materials are molded into a given shape, and the resulting molded article is calcined at a given temperature.

A part of the pore forming material added to the raw material powder is uniformly dispersed inside the molded article, and other parts are at a state exposed to the surface of the molded article. When the resulting molded article is calcined at a given temperature, therefore, the pore forming material is incinerated and vaporized and is then evaporated off, to form pores inside the base material and give desired mean surface roughness Rz to the surface of the base material.

For producing a honeycomb filter, furthermore, the kneaded raw material is extrusion molded into a honeycomb shape, which is then cut into a given length. The calcination includes such steps as a calcination process of incinerating and removing pore forming material and defatting and a sintering process of sintering ceramics. The calcination temperature is appropriately selected, taking account of the combustion performance of the pore forming material, the sintering performance of the ceramic raw material, and the like.

Furthermore, the mean surface roughness Rz of the base material is determined, depending on the grain size of the pore forming material added to the raw material powder, the blend ratio and the sintering shrinkage of the ceramics. Because the mean surface roughness Rz is larger at a larger grain size and a larger blend ratio of the pore forming material, generally, the grain size and blend ratio of the pore forming material should be selected so that the desired mean surface roughness Rz might be yielded, taking account of the shrinkage ratio of the ceramics.

The production of a particulate filter at the process of coating a slurry containing the pore forming material on the surface of the base material (referred to as "process B" hereinbelow) is carried out specifically by the following procedures. More specifically, the base material composing the main part of the filter should preliminarily be prepared. The material, shape and the like of the base material are not specifically limited.

For example, the base material of a honeycomb filter of straight flow type may comprise a dense material or a porous material. For a honeycomb filter of wall flow type, additionally, a base material of a mean pore diameter and porosity and the like should be prepared. Furthermore, the base material may satisfactorily be a sintered body after a sintering process or a calcined body simply after a calcining process.

Then, a combustible pore forming material comprising graphite, carbon black and the like with a given grain size is added, together with a binder, to a raw material powder with excellent bonding performance (for example, a powder of the same composition as that of the base material) for the base material, to prepare a slurry. The aforementioned base material is immersed in the resulting slurry, to coat the slurry over the surface of the base material.

After drying the coating layer formed on the surface of the base material, the layer is calcined at a given temperature, whereby the raw material powder contained in the slurry coated on the surface of the base material is integrally sintered together with the base material, while the pore forming material contained in the slurry is incinerated and vaporized, and is then evaporated off, to impart desired mean surface roughness Rz to the surface of the base material.

According to the process A described above, pores are formed inside the base material at a single sintering process and the desired mean surface roughness Rz is imparted to the surface of the base material, and therefore, the process is preferable as the method for producing a particulate filter of wall flow type. Additionally, the combination of the processes A and B is advantageous in that the mean pore diameter inside the base material and the mean surface roughness Rz on the surface of the base material can independently be controlled.

If the base material comprises a material containing a vitreous material, the base material thus produced in the aforementioned manner may be placed in an autoclave, for treatment with vapor at a high temperature and a high pressure. Because the vitreous material on the surface is softened or solubilized after autoclave treatment, the mean surface roughness Rz of the base material can further be made rough.

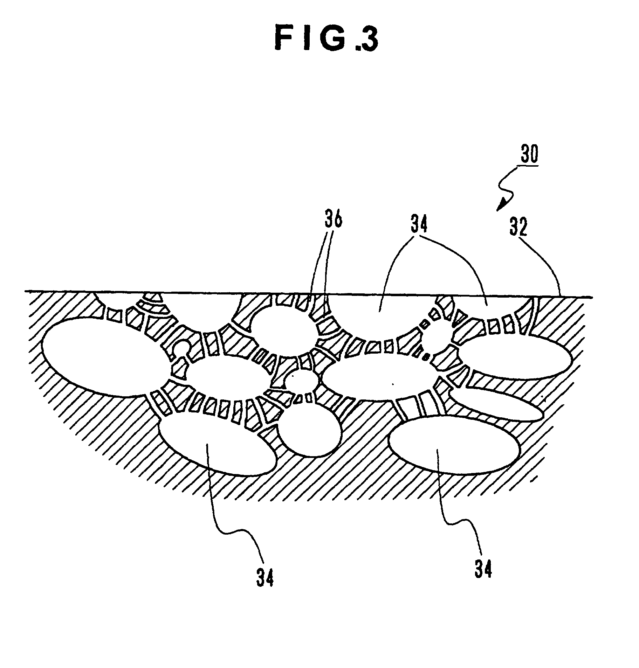

The composition of a particulate filter, equipped with a plurality of trapping chambers inside the base material and connecting pores communicating between the trapping chambers, is described with reference to drawings. Fig. 3 is an enlarged cross sectional view of such particulate filter, and in particulate filter 30, a great number of trapping chambers 34 are arranged on the surface and inside of base material 32 and the individual trapping chambers are communicated together through a plurality of connecting pores 36.

Preferably, the size of each of the trapping chambers 34 is 30 to 300 µm. If the size of each of the trapping chambers is less than 30 µm, the trapping efficiency and combustion efficiency of particulates in the trapping chambers 34 are deteriorated, unpreferably. If the size of each of the trapping chambers is above 300 µm, the frequency of particulates in contact with the trapping chambers 34 is reduced, involving the reduction of the combustion efficiency, unpreferably. If the size of each of the trapping chambers is too large, furthermore, particulate filter 30 is produced with much difficulty, from a structural standpoint.

The size of the connecting pores 36 is preferably within a range of 5 to 100 µm. If the diameter of the connecting pores 36 is less than 5 µm, the connecting pores 36 are clogged, involving the increase of pressure loss, unpreferably. If the diameter of the connecting pores 36 is above 100 µm, the trapping efficiency and combustion efficiency of particulates inside the trapping chambers 34 are reduced, unpreferably.

If the diameter of the connecting pores 36 is the same size as or more than the size of the trapping chambers 34, the resulting structure is identical to a structure wherein pores simply linked three-dimensionally are uniformly dispersed, so that various effects gained by arranging the connecting pores 36 cannot be recovered. Thus, it is needless to say that the diameter of the connecting pores 36 is required to be smaller than the diameter of the trapping chambers 34.

Herein, the material and shape of the base material 32 are not specifically limited, and various materials and shapes can be used, which is the case with the aforementioned particulate filter of a base material with crude surface. Among them, cordierite is particularly preferable as a material of the base material because such connecting pores are readily formed. Because various effects recovered by the arrangement of trapping chambers and connecting pores inside the base material are prominently exerted in a honeycomb filter of wall flow type, the honeycomb shape is particularly preferable as the base material.

The processes of trapping and incinerating particulates by means of a particulate filter with trapping chambers and connecting pores as shown in Fig. 3, are now described. When exhaust gas containing particulates flows in an exhaust gas passage arranged with particulate filter 30 with plural trapping chambers 34 and connecting pores 36 communicating between the trapping chambers 34, a part of the exhaust gas infiltrates into the inside of the trapping chamber 34 opened on the surface of the base material 32.

When exhaust gas infiltrates into the trapping chamber 34, particulates contained in the exhaust gas are partially trapped on the inner wall area of the trapping chamber 34. The remaining particulates are retained for a while in the trapping chamber 34, and are then sequentially transferred through the connecting pores 36 into the other trapping chambers 34, arranged inside the base material 32. During the transfer, the particulates never trapped on the surface of the base material 32 are trapped on the inner wall area of the trapping chambers 34, so that particulates reaching the side of the outlet of the particulate filter decrease considerably.

Because the surface area to trap particulates is enlarged due to the arrangement of the trapping chambers 34, particulates are never deposited thickly on the surface of the base material or the inner wall area of the trapping chamber 34. Additionally because the individual trapping chambers 34 are communicated together through a plurality of connecting pores 36, combustible particulates are transferred through another connecting pore 36 into the next trapping chamber 34 even if one connecting pore 36 is clogged. Consequently, the particulate filter 30 is unlikely to be clogged, so that the increase of pressure loss is suppressed.

Because the diameter of the connecting pores 36 is smaller than the size of the trapping chambers 34, particulates pass through the connecting pores 36 at a high speed and are then released into the next trapping chamber 34, where the flow rate of particulates is slow down, so that the particulates are retained there for a while. Compared with conventional filters with pores uniformly dispersed, the frequency of particulates collided with the inner wall area of the trapping chamber 34 is increased until exhaust gas passes through the particulate filter. Consequently, the catch fire temperature of particulates is lowered, to improve the combustion efficiency of particulates.

The method for producing a particulate filter equipped with trapping chambers and connecting pores is described. Depending on the material of the base material, trapping chambers and connecting pores are formed by various methods. If cordierite is used as the base material, in particular, connecting pores are formed inside the cordierite particles, advantageously, at a stage of synthesizing cordierite. The method for generating connecting pores at a stage of synthesizing cordierite includes a method by using crude talc and a method by using granulation powder.

The production of a particulate filter by the method by using crude talc (referred to as "process C" hereinafter) is carried out specifically by the following procedures. More specifically, firstly, alumina, kaolin and talc are prepared as starting materials. In this case, the grain size of talc is larger than the sizes of alumina and kaolin.

Subsequently, powders of alumina, kaolin and talc are weighed at a ratio of 15, 40 and 45 wt %, respectively, and are then mixed together. Furthermore, given amounts of a combustible pore forming material (for example, combustible materials at low temperatures, such as a carbon black particle of an average particle size of about 200 µm and resin particles), a molding binder and water are added and mixed into the resulting mixture powder, for molding. The blend ratio can be selected appropriately, depending on the molding method. For extrusion molding, the blend ratio is satisfactorily as follows: 49 wt % of the mixture powder, 20 wt % of the pore forming material, 13 wt % of the molding binder, and 18 wt % of water.

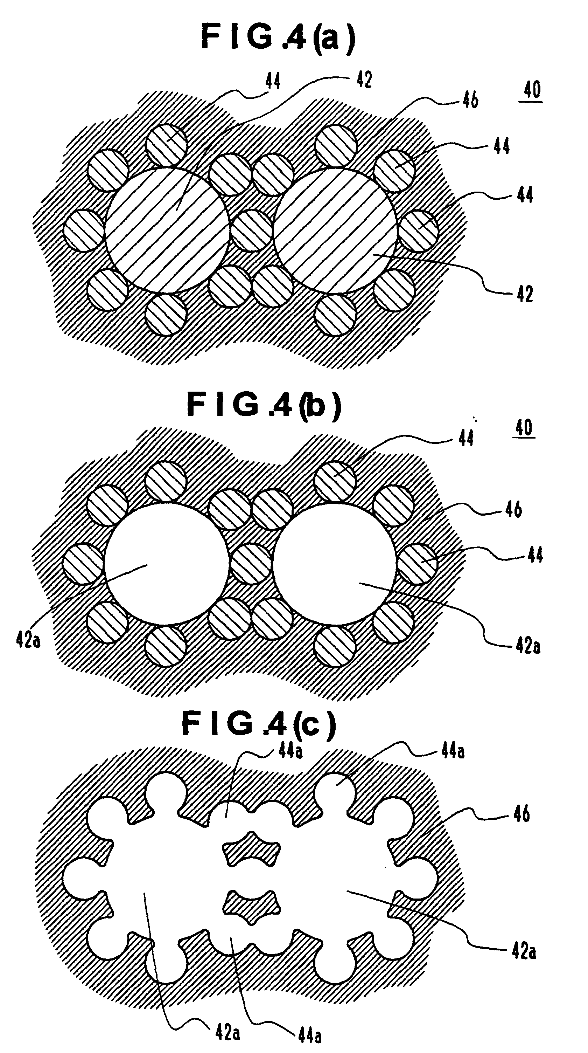

Fig. 4(a) schematically depicts the cross sectional view of the resulting molded article. Pore forming materials 42 are dispersed inside the molded article 40. Because the talc ratio is high, additionally, a three-dimensional network structure of crude talc particles 44 is formed around the pore forming materials 42. Furthermore, mixture powder 46 of microfine alumina and kaolin is packed in the space between the pore forming materials 42 and talc particles 44.

The molded article of the cross sectional tissue as shown in Fig. 4(a) is dried and defatted, and for removing the pore forming material, furthermore, the molded article is subject to thermal treatment (calcination) in atmosphere. At the stage, the molded article is at such a state that the pore forming materials 42 are incinerated and removed, as shown in Fig. 4(b), and crude pores 42a are formed.

At the following calcination process, furthermore, the calcined base material is heated around 1,400 °C, for synthesis of cordierite. If the base material temperature is above about 1,300 °C, then, talc 44 is melt as shown in Fig. 4(c), and the melted matter is absorbed onto the mixture powder 46 of alumina and kaolin thereabout, so that the place where the talc is present is modified as pores 44a. In such manner, a three-dimensional network of pores 44a communicating the crude large pores 42a, namely connecting pore, is formed. At the final stage of calcination, then, the mixture of alumina and kaolin and the melted talc react together, to form cordierite.

The size of the trapping chamber can be controlled by finely adjusting the grain size of the crude granulation material added into the raw material powder, and a larger grain size of the crude granulation material can form a lager trapping chamber. Similarly, the diameter of the connecting pore can be controlled by finely adjusting the grain size of the talc to be used for the synthesis of cordierite, and the use of a type of talc with a smaller grain size can make the diameter of the connecting pore smaller.

If the grain size of the talc is too small, the diameter of the connecting pore formed in the cordierite gets too small, unpreferably. Additionally, pores generated due to the melting of the talc may be isolated without communication to each other, unpreferably. If the grain size of the talc is too large, the diameter of the connecting pore is the same as or larger than the size of the trapping chamber, unpreferably, so that various effects due to the arrangement of such connecting pores cannot be recovered. Thus, the grain size of the talc to be used according to the process C is preferably 5 to 200 µm.

The production of a particulate filter according to a process by using granulation powder (referred to as "process D" hereinbelow) is carried out specifically by the following procedures. More specifically, firstly, alumina, kaolin and talc are prepared as starting materials. In this case, the grain size of talc should be 10 to 30 µm. According to the process D, unlike the process C, the talc is not necessarily cruder than alumina or kaolin.

Subsequently, the powders of alumina and kaolin are mixed together at a ratio of 15 : 45, to prepare a granulation powder of an average grain size of 40 to 100 µm. In the granulation powder, furthermore, a trace amount of talc may be added satisfactorily.

Alternatively, the alumina, kaolin and talc are additionally weighed at given amounts, and are then mixed together. The blend ratio of the powders to be mixed together should be such that the ratio of alumina : kaolin : talc might be 15 : 40 : 45, finally, when the resulting mixture powder is added to the granulation powder. Thus, talc is slightly contained in the granulation powder, and hence, the ratio of talc in the mixture powder is absolutely higher.

Subsequently, the granulation powder, mixture powder, a combustible crude granulation material (for example, combustible materials at low temperatures, such as a carbon black particle of an average particle size of about 200 µm and resin particles), a molding binder and water are weighed at given amounts and are then mixed together, for preparing a molded article by extrusion molding. A microfine pore-forming material, a microfine kaolin, a microfine talc and the like may satisfactorily be mixed into the mixture.

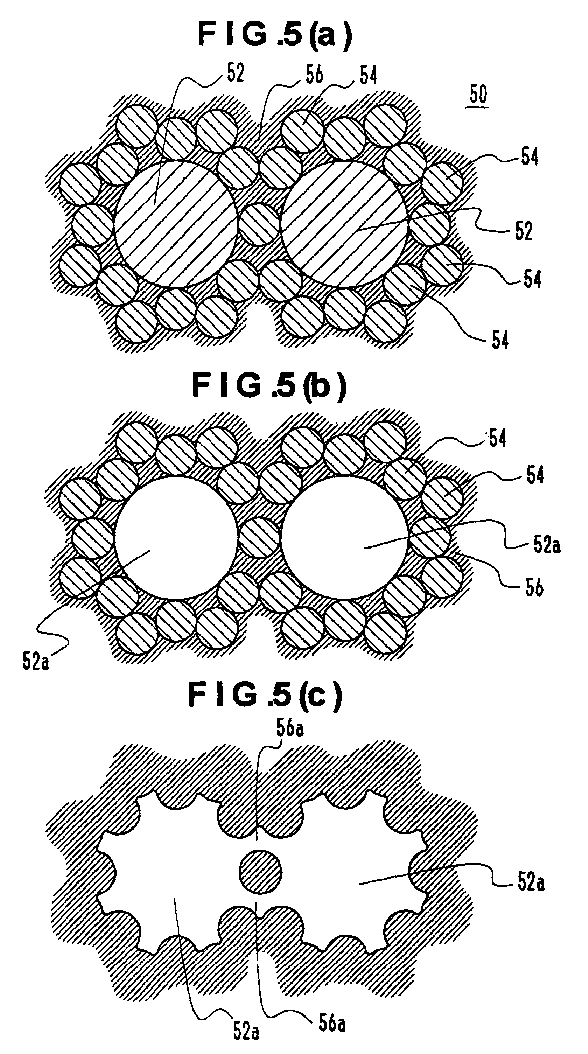

Fig. 5(a) schematically depicts the cross sectional view of the resulting molded article. Inside the molded article 50 are dispersed crude pore-forming materials 52. Because the ratio of the granulation powders 54 comprising alumina and kaolin is high, a three-dimensional network structure of the granulation powders 54 is already formed around the crude pore-forming materials 52. Furthermore, the mixture powder 56 of alumina, kaolin and talc is at a packed state in the nicks of the crude pore-forming materials 52 and granulation powders 54.

By drying and defatting the molded article of the cross sectional tissue as shown in Fig. 5(a), subsequently, the molded article is further thermally treated (calcined) in atmosphere so as to remove the crude pore-forming material. At the stage, the molded article is at such a state that the pore forming materials 52 are incinerated and removed, as shown in Fig. 5(b) and crude pores 52a are then formed. Inside the granulation powders 54, the molded article is at such a state that small pores (not shown) are generated.

At the following calcination process, furthermore, the calcined base material is heated around 1,400 °C, for synthesis of cordierite. If the base material temperature is above about 1,300 °C, then, talc contained at a greater amount in the mixture powder 56 is melted as shown in Fig. 5(c), and the melted matter is absorbed onto the granulation powder 56 of alumina and kaolin therearound, so that the place where the talc is present is modified as pores 56a. In such a manner, a three-dimensional network of pores 56a communicating the crude large pores 52a, namely connecting pore, is formed. At the final stage of calcination, then, the mixture of alumina and kaolin and the melted talc react together, to form cordierite.

As has been described above, according to the process C or D, a plurality of connecting pores connecting trapping chambers together can readily be formed at the synthetic stage of cordierite, advantageously. By controlling the grain size of cordierite and the grain size of the granulation powder, the diameter of the connecting pore can advantageously be controlled readily. Because the crude pore-forming material is used so as to form the trapping chambers, the trapping chambers can be formed during calcination, and simultaneously, the mean surface roughness Rz of the base material turns crude, so that a particulate filter with higher trapping efficiency and combustion efficiency can be produced. By the combination of the process C or D with the process B, the mean surface roughness Rz of the base material can be made cruder.

The process of forming such connecting pore is not limited to the process C or D, and other processes may be used for the formation. By adjusting the grain size of the ceramic raw material powder as the principal component of the base material and communicating pores formed at the triple point of each particle of the ceramics raw material powder to prepare a connecting pore, for example, the resulting connecting pores is used to satisfactorily connect the trapping chambers together. By appropriately adjusting the grain sizes and blending amounts of carbon black and graphite and other particles to be added as pore-forming materials, the trapping chambers generated through the combustion of the crude pore-forming material are communicated together by means of the connecting pores generated through the combustion of microfine pore-forming materials.

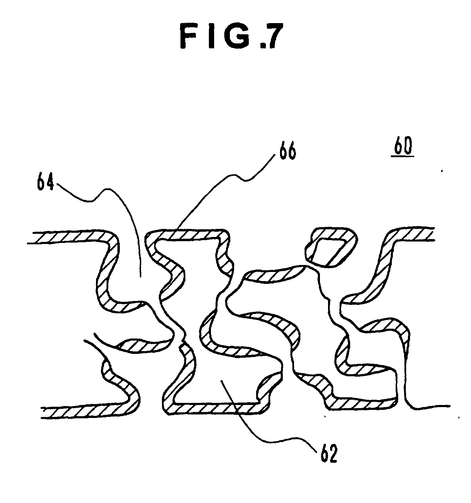

With reference to drawings, the structure of a particulate filter with a heat insulating layer arranged at least on a part of the surface of the base material will now be described. Fig. 7 is an enlarged cross sectional view of such particulate filter, and the particulate filter 60 is equipped with a great number of trapping chambers 64 in the base material 62. Because a part of the trapping chambers 64 is opened on the surface of the base material 62, additionally, the base material 62 is at a state such that given surface crudeness is imparted to the base material 62. Furthermore, heat insulating layer 66 is formed on the surface of the base material 62 and the inner wall areas of the trapping chambers 64.

Herein, it is required that the heat insulating layer 66 comprises a substance with a smaller thermal conductivity and a smaller thermal capacity than the thermal conductivity and thermal capacity of the base material 62. More specifically, the heat insulating layer 66 preferably comprises titania (TiO₂) or silica (SiO₂), for example, when cordierite is used as the base material 62.

The thickness of the heat insulating layer 66 formed on the surface of the base material 62 is furthermore preferably 1 to 50 µm. If the thickness of the heat insulating layer 66 is less than 1 µm, unpreferably, thermal insulation gets insufficient, so that the catch fire temperature of particulates cannot be lowered. If the thickness of the heat insulating layer 66 is more than 50 µm, unpreferably, the mean surface roughness Rz of the surface of the base material 62 is reduced or the size of the trapping chambers 66 formed inside the base material 62 is reduced or the combustion efficiency is lowered or the pressure loss is increased.

The material and shape of the base material 62 are not specifically limited, and various materials and shapes may satisfactorily be used, which is the case with the aforementioned particulate filter of the base material of crude surface. Additionally, the base material 62 is not limited only to those equipped with trapping chambers 64. For a honeycomb filter of straight flow type, for example, a honeycomb structure composed of a dense material imparted with the given mean surface roughness Rz according to the process B may satisfactorily be used as the base material 62.

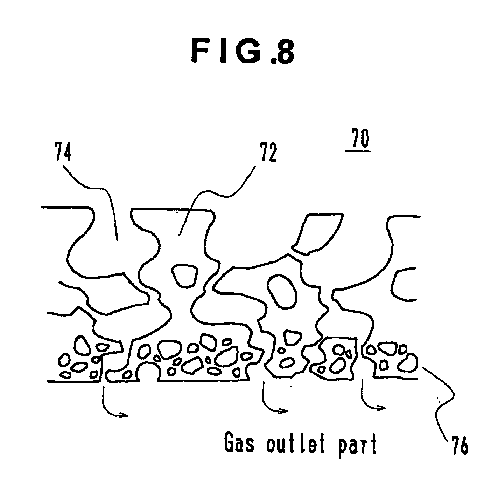

Then, the structure of a particulate filter in another form wherein a heat insulating layer is arranged at least on a part of the surface of the base material, is described. For a particulate filter of wall flow type, in particular, exhaust gas passes through the partition wall as a part of the base material, so a heat insulating layer with a higher porosity than the porosity on the gas inlet part is arranged on the gas outlet part of the partition wall. Fig. 8 depicts one example, where a great number of trapping chambers 74 are arranged inside the base material 72 in particulate filter 70. Additionally, heat insulating layer 76 is formed on the gas outlet part of the base material 72.

The porosity of the heat insulating layer 76 arranged on the gas outlet part is preferably 60 % or more. If the porosity of the heat insulating layer 76 is less than 60 %, unpreferably, the thermal insulation of the base material 72 is so insufficient that the catch fire temperature of particulates cannot be lowered. More satisfactorily, the heat insulating layer 76 has a higher porosity as long as producible.

The thickness of the heat insulating layer 76 arranged on the gas outlet part is preferably 20 to 500 µm. If the thickness of the heat insulating layer 76 is less than 20 µm, the thermal insulation of the base material 72 is so insufficient that the catch fire temperature of particulates cannot be reduced, unpreferably. If the thickness of the heat insulating layer 76 is above 500 µm, alternatively, the increase of pressure loss is induced, unpreferably.

The processes of trapping and incinerating particulates by means of a particulate filter with the heat insulating layer as shown in Figs. 7 and 8 are now described. When exhaust gas containing particulates flows in a exhaust gas passage arranged with particulate filters 60, 70 with a heat insulating layer arranged at least on a part of the surface of the base materials 62, 72, exhaust gas infiltrates into the recess parts on the surface of the base materials 62, 72 or the trapping chambers 64, 74 formed inside the base materials 62, 72. Then, the particulates in the exhaust gas are trapped on the surface of the base materials 62, 72 and the inner wall area of the trapping chambers 64, 74.

In order to incinerate the particulates contained in the exhaust gas in oxygen remaining in the exhaust gas without flame, the particulates should be put sufficiently in contact with oxygen, and simultaneously, the surface of the base materials 62, 72 on which the particulates are deposited as well as the inside of the trapping chambers 64, 74 should be heated to a temperature required for the catch fire of particulates.

In a common filter with no heat insulating layer formed thereon, the combustion reaction heat from even the initial combustion of particulates deposited on the surface or inside of the base materials 62, 72 is scattered through the base materials 62, 72 outside the system, so the combustion of the particulates does not continuously progress. In order to continuously incinerate particulates deposited on the surface of the base materials 62, 72 or the trapping chambers 64, 74, it is required to wait until the exhaust gas temperature is elevated, so the combustion temperature of the particulates is elevated from the standpoint of the whole system.

Alternatively, heat insulating layer 66 is arranged on the surface of the base material 62 and the inner wall area of the trapping chamber 64 as an combustion reaction area of particulates as shown in Fig. 7, or heat insulating layer 76 is arranged on the gas outlet part of the base material 72, and in that case, the combustion reaction heat from particulates initially incinerated is accumulated inside the base materials 62, 72, and then, the accumulated combustion reaction heat is utilized for the catch fire of another particulate deposited thereon. Consequently, the combustion of particulates continuously progresses even at a low temperature of exhaust gas, so that the combustion temperature of particulates as the whole system is lowered.

The method for producing a particulate filter with a heat insulating layer at least on a part of the surface of the base material will now be described. The method for arranging a heat insulating layer on the surface of the base material or inside the trapping chamber includes for example a method for immersing the whole base material into a slurry of a heat insulating material (referred to as "process E" hereinbelow).

The production of a particulate filter according to the process E is carried out specifically by the following procedures. In other words, firstly, the base material of a particulate filter is prepared. The base material may satisfactorily be a base material with a given mean surface roughness Rz, as recovered according to the process A or B, or a base material with trapping chambers and connecting pores as recovered according to the process C or D. The base material may satisfactorily be a base material recovered by a combination of the processes A through D.

The resulting whole base material is then immersed in a slurry or sol of a heat insulating material such as titania (TiO₂) and silica (SiO₂) or immersed in an aqueous solution of a metal salt dissolved therein, and then, the base material is dried and thermally treated at a given temperature, whereby a heat insulating layer is formed on the surface of the base material and the inner wall area of the trapping chambers.

For forming such heat insulating layer, herein, slurry of ceramic powder, colloidal solutions or aqueous solutions of alkoxides and metal salts may preferably be employed. For forming a heat insulating layer by preparing a slurry containing a heat insulating material powder and immersing the base material in the slurry, the grain size of the powder is required to be smaller than the pore diameter of the base material. More specifically, a powder of an average grain size of 5 µm or less is preferable. Furthermore, it is possible to control the thickness of the heat insulating layer by adjusting the slurry concentration, the number of immersion procedures, and the like.

The method for arranging a heat insulating layer with a high porosity (referred to "high porosity heat insulating layer" hereinbelow) includes for example a method for forming the high porosity heat insulating layer, comprising selectively coating a slurry only at the gas outlet part of the base material (referred to as "process F" hereinbelow).

The production of a particulate filter according to the process F is carried out specifically by the following procedures. More specifically, firstly, a base material of wall flow type is prepared. In this case, a base material with uniformly dispersed pores of almost an equal diameter may satisfactorily be used, but it is preferable to use a honeycomb filter of wall flow type with trapping chambers and connecting pores as recovered by the process C or D.

By preparing the slurry of a pore-forming material with a smaller grain size than that of the crude pore-forming material used for preparing the base material and the ceramic material composing the high porosity heat insulating layer, the resulting slurry is coated only on the gas outlet part of the base material. Because the cells in the honeycomb filter of wall flow type are alternately sealed, the slurry can readily be coated only on the inner wall area of the cells on the side of gas outlet. By drying and defatting the coated slurry and then calcining the slurry at a given temperature, the high porosity heat insulating layer is formed on the gas outlet side.

The porosity of the high porosity heat insulating layer can be controlled by means of the grain size and blend ratio of a pore-forming material to be added into the slurry, the slurry concentration and the like. Additionally, the thickness of the high porosity heat insulating layer can be controlled by means of the slurry concentration, the number of immersion procedures and the like.

### Example 1

A particulate filter of wall flow type and with given mean surface roughness Rz was prepared by using the process A. More specifically, alumina of a mean grain size of 1.2 µm, kaolin of a mean grain size of 1.0 µm, and talc of a mean grain size of 10 µm were individually weighed as starting materials so that alumina, kaolin and talc might be at 15 wt %, 40 wt % and 45 wt %, respectively, and they were mixed together (referred to as "cordierite composition powder A" hereinafter).

Then, 64 wt % of cordierite composition powder A and 36 wt % of a graphite particle of a mean grain size of 30 to 300 µm as a pore-forming material were admixed, and 10 wt % of a binder sold as "a trade name of Cerander YB-133" and 30 wt % of water were added to the total weight of the admixture. The obtained mixture was then kneaded together and prepared into a molded article of a honeycomb shape with a 35-mm diameter and a 50-mm length, by extrusion molding. The resulting molded article was defatted, then was calcined in atmosphere under conditions of 1,440 °C × 2 hours, and the cell inlet and outlet of the honeycomb were alternately sealed to prepare a particulate filter of wall flow type.

The surface roughness of the resulting particulate filter was measured with a non-contact surface roughness meter. The mean surface roughness Rz was 170 µm. The pore diameter of the base material was measured with a mercury porosimeter. The mean pore diameter was 50 µm.

### Comparison Example 1

Following the same procedures as in Example 1, except for the use of a graphite particle of a grain size of 5 to 50 µm, a particulate filter of wall flow type was prepared. The mean surface roughness Rz and mean pore diameter of the resulting particulate filter were measured by the same procedures as in Example 1. The mean surface roughness Rz was 20 µm, while the mean pore diameter was 15 µm.

In order to examine the relation between the mean surface roughness Rz of each base material and the combustion performance (combustion efficiency) of particulates in the particulate filters of Example 1 and Comparison Example 1, an combustion test was performed. The combustion test was conducted by the following procedures. More specifically, exhaust gas generated via the combustion of gas oil (diesel oil) flowed from the cell inlet sides of the particulate filters, whereby soot was preliminarily trapped on the inner wall area of the cells of the base materials.

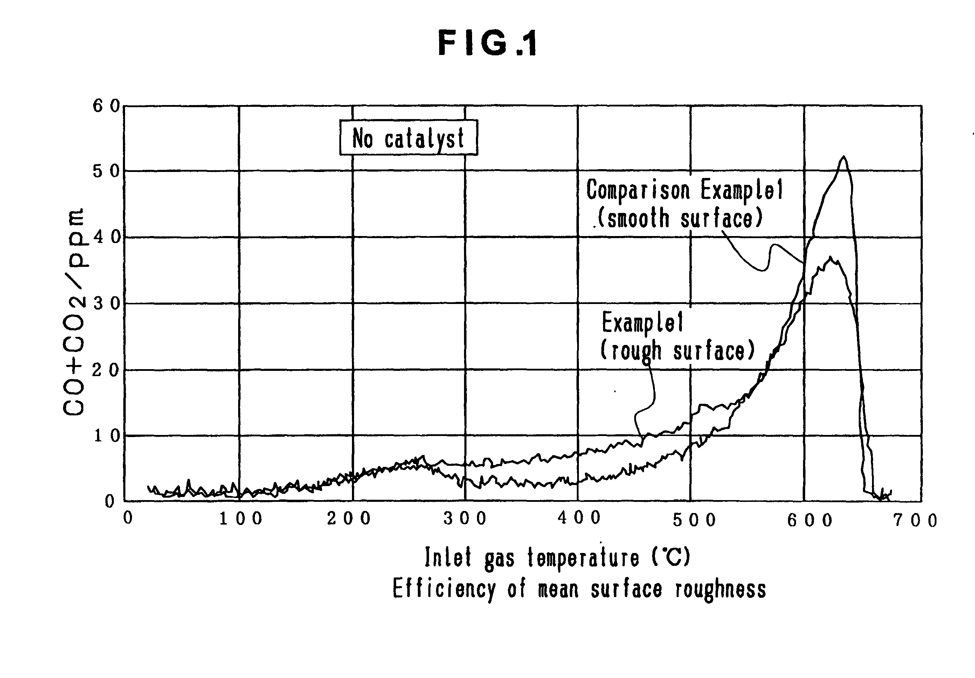

Subsequently, an inlet gas temperature detector was arranged on the cell inlet sides of the particulate filters, while level meters of CO and CO₂ were arranged on the cell outlet sides. By introducing a model gas of N₂ ,O₂ and NO in mixture from the cell inlet sides while elevating the temperature, the relation between the inlet gas temperature (°C) and the level (ppm) of CO + CO₂ generated through soot combustion was determined. The results are shown in Fig. 1. In Fig. 1, herein, no catalyst was loaded on the surface of the base material of any of the particulate filters.

In Comparison Example 1 wherein the mean surface roughness Rz of the base material was 20 µm (smooth surface), the level of CO + CO₂ in the exhaust gas from the particulate filter was gradually increased at the inlet gas temperature just above 400 °C. When the inlet gas temperature was above 500 °C, additionally, the level of CO + CO₂ was rapidly increased to reach its peak when the inlet gas temperature was 650 °C. The level of CO + CO₂ then was 52 ppm.

In Example 1 wherein the mean surface roughness Rz of the base material was 170 µm (rough surface), in contrast, the level of CO + CO₂ in the exhaust gas showed gradual increase, starting just when the inlet gas temperature was a relatively low temperature of about 300 °C. Additionally, the level of CO + CO₂ in the exhaust gas was higher than the level in Comparison Example 1, when the inlet gas temperature was within a range of 300 °C to 550 °C. When the inlet gas temperature was above 550 °C, furthermore, the level of CO + CO₂ was adversely less than the level in Comparison Example 1; the inlet gas temperature was lowered to 620 °C when the level of CO + CO₂ reached the peak. Additionally, the level of CO + CO₂ then was lowered to 36 ppm.

Based on the aforementioned results, it was indicated that the combustion efficiency of soot in a low temperature region (300 °C to 500 °C) was improved when the surface of the base material of the particulate filter was rough surface, compared with the case that the surface was smooth surface. Because the combustion of trapped soot progressed in a low temperature region, the temperature at which the level of CO + CO₂ reached the peak shifted toward low temperatures, involving the reduction of the peak level.

### Example 2

A particulate filter of wall flow type and with given mean surface roughness Rz was prepared by using the process B. Following the same procedures as in Example 1 except for the use of a graphite particle of a grain size of 5 to 100 µm as a pore-forming material, a honeycomb sintered body of wall flow type was prepared, which was composed of cordierite (2MgO·2Al₂O₃·5SiO₂).

In order to make the surface of the base material rough, a slurry composed of 35 wt % of a cordierite powder of a mean grain size of 1.2 µm, 10 wt % of a polyvinyl alcohol based binder, 30 wt % of a graphite particle of a grain size of 30 to 300 µm, 0.5 wt % of a polycalboxylic acid ammonium dispersing agent and the remaining part of water was prepared.

Then, the aforementioned honeycomb sintered body was immersed in the slurry, to deposit the slurry on the surface of the base material. After subsequent drying and defatting, then, the sintered body was then calcined in atmosphere under conditions of 1,410 °C × 1 hour, whereby a particulate filter of wall flow type was recovered.

The surface roughness of the resulting particulate filter was measured with a non-contact surface roughness meter. The mean surface roughness Rz was 170 µm. Following the same procedures as in Example 1, a combustion test was conducted. As in Example 1, a higher level of CO + CO₂ was detected in a low temperature region of the inlet gas temperature of 300 °C to 500 °C, than the level in Comparison Example 1. It was additionally confirmed that compared with the Comparison Example 1, the temperature at which the level of CO + CO2 reached the peak shifted toward low temperatures, involving the reduction of the peak level.

### Example 3

By the following procedures, a particulate filter with ceria (CeO₂) loaded thereon as an oxidation catalyst was prepared. Following the same procedures as in Example 1, more specifically, a particulate filter of wall flow type was prepared. Subsequently, the resulting particulate filter was immersed in an aqueous solution of cerium nitrate for 30 minutes, for subsequent thermal treatment in atmosphere under conditions of 500 °C × 2 hours. The surface roughness of the base material after loaded with the catalyst was measured with a non-contact surface roughness meter. The mean surface roughness Rz was 170 µm.

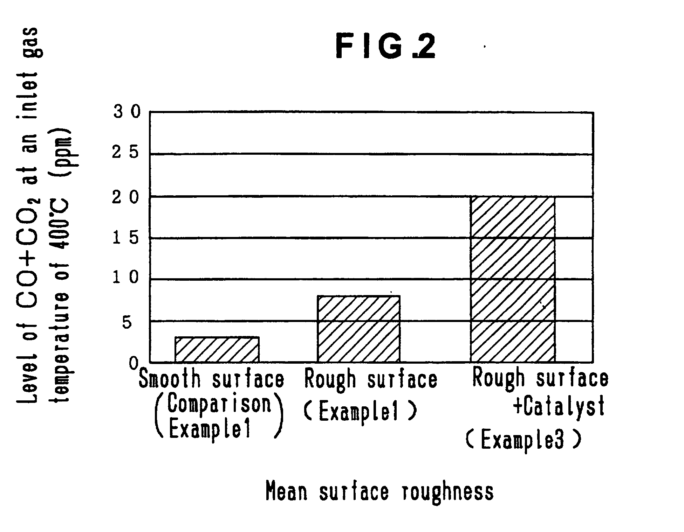

Following the same procedures as in Example 1, the combustion test of the resulting particulate filter was conducted, to determine the level in ppm of CO + CO₂ in the exhaust gas at the inlet gas temperature of 400 °C. The results are shown in Fig. 2. In Fig. 2, herein, the results for the particulate filters of Example 1 and Comparison Example 1 are also shown collectively.

The level in ppm of CO + CO₂ in the exhaust gas at the inlet gas temperature of 400 °C was the lowest in Comparison Example 1 where the surface of the base material was smooth surface, which was only 3 ppm. On contract, the level of CO + CO₂ was 8 ppm in Example 1 wherein the surface of the base material was rough surface; furthermore, the level was elevated to 20 ppm in Example 3 wherein a catalyst was loaded on the surface of the base material. Based on the results, the combustion efficiency of particulates in a low temperature region was further improved when the surface of the base material was rough surface and a catalyst was loaded on the surface of the base material.

### Example 4

By using the process B, a particulate filter of straight flow type and with given mean surface roughness Rz was prepared. More specifically, 10 wt % of a binder sold as "a trade name of Cerander YB-133" and 30 wt % of water were added to the cordierite composition powder A used in Example 1. Because it was not required to control the pore diameter of the base material for straight flow type, no pore-forming material was added.

By kneading the blend together followed by extrusion molding, a molded article of a honeycomb shape of a 35-mm diameter and a 50-mm length was prepared. The resulting molded article was defatted and then sintered in atmosphere under conditions of 1,440 °C × 2 hours, to prepare a honeycomb sintered body.

So as to make the surface roughness of the base material more large, a slurry comprising 35 wt % of the cordierite composition powder A, 30 wt % of a graphite particle of a grain size of 10 to 50 µm, 10 wt % of a binder, 0.5 wt % of a polycalboxylic acid ammonium dispersing agent and the remaining part of water was prepared. By immersing the honeycomb sintered body in the slurry, the slurry was deposited onto the surface of the honeycomb sintered body. After drying the slurry and calcining the resulting sintered body in atmosphere under conditions of 1,410 °C for one hour, a particulate filter of straight flow type was recovered. The surface roughness of the resulting particulate filter was measured with a non-contact surface roughness meter. The mean surface roughness Rz was 30 µm.

### Example 5

Following the same procedures as in Example 4 except that the grain size of the graphite particle added into the slurry was 30 to 300 µm, a particulate filter of straight flow type was prepared. The surface roughness of the resulting particulate filter was measured with a non-contact surface roughness meter. The mean surface roughness Rz was 170 µm.

### Example 6

Following the same procedures as in Example 4 except that the grain size of the graphite particle added into the slurry was 100 to 800 µm, a particulate filter of straight flow type was prepared. The surface roughness of the resulting particulate filter was measured with a non-contact surface roughness meter. The mean surface roughness Rz was 550 µm.

### Example 7

Following the same procedures as in Example 4 except that the grain size of the graphite particle added into the slurry was 300 to 900 µm, a particulate filter of straight flow type was prepared. The surface roughness of the resulting particulate filter was measured with a non-contact surface roughness meter. The mean surface roughness Rz was 700 µm.

### Example 8

Following the same procedures as in Example 4 except that the grain size of the graphite particle added into the slurry was 500 to 1,100 µm, a particulate filter of straight flow type was prepared. The surface roughness of the resulting particulate filter was measured with a non-contact surface roughness meter. The mean surface roughness Rz was 1,000 µm.

### Comparison Example 2

Following the same procedures as in Example 4 except that the calcining process after coating the slurry containing graphite particle on the surface of the base material was not conducted, a particulate filter of straight flow type was prepared. The surface roughness of the resulting particulate filter was measured with a non-contact surface roughness meter. The mean surface roughness Rz was 20 µm.

### Comparison Example 3

Following the same procedures as in Example 4 except that the grain size of the graphite particle added into the slurry was 700 to 1200 µm, a particulate filter of straight flow type was prepared. The surface roughness of the resulting particulate filter was measured with a non-contact surface roughness meter. The mean surface roughness Rz was 1,100 µm.

The soot trapping efficiency (%), the level in ppm of CO + CO₂ at the inlet gas temperature of 400 °C, the soot combustion peak temperature (°C) and pressure loss (mmH₂O) of individual particulate filters, as recovered in the Examples 4 to 8 and Comparison Examples 2 and 3, were measured.

The soot trapping efficiency was expressed as the ratio in % of soot exhausted from each filter to the soot flowing into the filter. The soot exhaust was measured with a smoke meter arranged downstream the filter, while the soot generated via the combustion of gas oil flowed from the upstream of the filter while retaining the filter surface temperature at about 200 °C.

Additionally, the pressure loss was expressed as the pressure difference (mmH₂O) between the inlet and outlet of the filter. The pressure difference was measured with pressure difference meters arranged on the inlet and outlet of the filter, while air at ambient temperature flowed from the filter inlet under conditions of a pressure of 1.5 kg/mm² and a flow of 2 liters/min. Furthermore, the level in ppm of CO + CO₂ and combustion peak temperature (°C) were measured by the same procedures as in Example 1. The results are shown in Table 1.

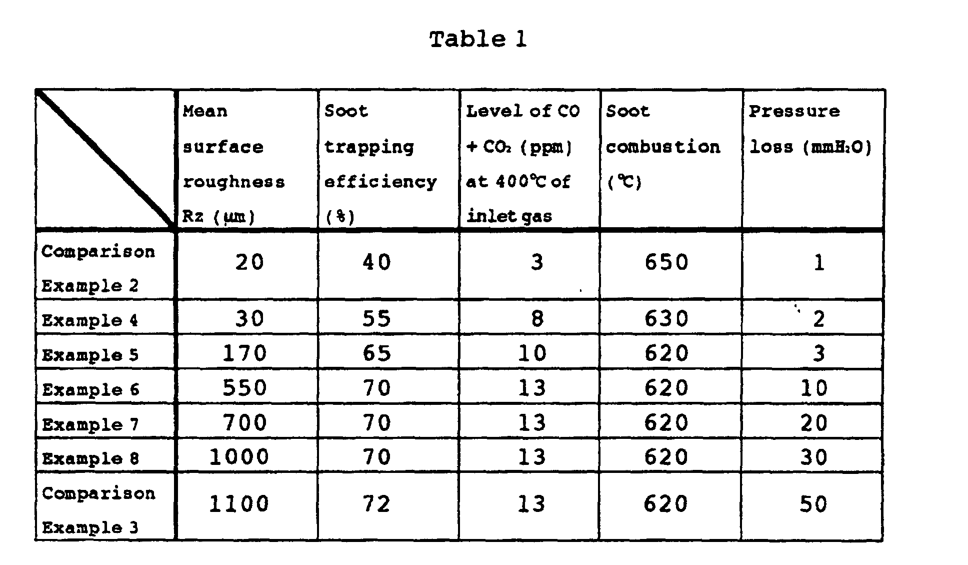

The soot trapping efficiency in Comparison Example 2 wherein the mean surface roughness Rz was 20 µm, was 40 %. Alternatively, the soot trapping efficiencies in Examples 4 and 5 wherein the levels of the mean surface roughness Rz were 30 µm and 170 µm, respectively, were improved to 55 % and 65 %, respectively. Additionally, in Examples 6 to 8 where the mean surface roughness Rz was 550 to 1,000 µm, the soot trapping efficiency was improved to 70 %; and furthermore, the soot trapping efficiency in Comparison Example 3 wherein the mean surface roughness Rz was 1,100 µm was improved to 72 %.

In Comparison Example 2 where the mean surface roughness Rz was 20 µm, almost no CO or CO₂ was detected in a low temperature region of the inlet gas temperature, while at the inlet gas temperature of 400 °C, the level of CO + CO₂ was 3 ppm. When the mean surface roughness Rz was 30 µm or more, alternatively, CO and CO₂ were detected only slightly in the low temperature region of the inlet gas temperature. The level of CO + CO₂ at 400 °C of the inlet gas temperature was 8 ppm in Example 4 and 10 ppm in Example 5, while the level was increased to 13 ppm in Examples 6 to 8 and Comparison Example 3.

The combustion peak temperature in (°C) of soot was the highest in Comparison Example 2 wherein the mean surface roughness Rz was 20 µm, which was 650 °C. The combustion peak temperature in (°C) of soot was 630 °C in Example 4 wherein the mean surface roughness Rz was 30µm; furthermore, the combustion peak temperature in (°C) of soot was lowered to 620 °C in all of Examples 5 to 8 and Comparison Example 3.

In Comparison Example 1 wherein the mean surface roughness Rz was 20 µm, the pressure loss was as small as 1 mmH₂O. In Examples 4 with the mean surface roughness Rz being 30 µm and in Example 5 with the mean surface roughness Rz being 170 µm, the levels of the pressure loss were 2 mmH₂O and 3 mmH₂O, respectively, with no large change in the pressure loss.

As the mean surface roughness Rz increased to 550 µm (Example 6), 700 µm (Example 7) and 1,000 µm (Example 8), the levels of the pressure loss increased to 10 mmH₂O, 20 mmH₂O and 30 mmH₂O, respectively, but the pressure loss at such level did not affect the engine performance. In Comparison Example 3 with the mean surface roughness Rz of 1,100 µm, however, the pressure loss reached 50 mmH₂O, involving the deterioration of the engine performance. This is owing to the fact that passing area for gas flowing in the cell became small.

Based on the aforementioned results, it was indicated that the pressure loss was small at mean surface roughness Rz below 30 µm but the combustion performance of soot was deteriorated. It was also indicated that the combustion performance of soot was excellent at the mean surface roughness Rz above 1,000 µm but the pressure loss was large. More specifically, the mean surface roughness Rz of a base material with excellent soot combustion performance from which a particulate filter of straight flow type with less pressure loss was produced was within a range of 30 µm to 1000 µm. Additionally, Table 1 indicates that the mean surface roughness Rz is particularly preferably within a range of 170 µm.

Following the same procedures as in Example 3, ceria as an oxidation catalyst was loaded onto the individual particulate filers recovered in Examples 4 to 8 and Comparison Examples 2 and 3. Following the same procedures as described above, the mean surface roughness Rz (µm), the soot trapping efficiency (%), the level in ppm of CO + CO₂ at the inlet gas temperature of 400 °C, the soot combustion peak temperature (°C) and pressure loss (mmH₂O) of the resulting individual particulate filters were measured.

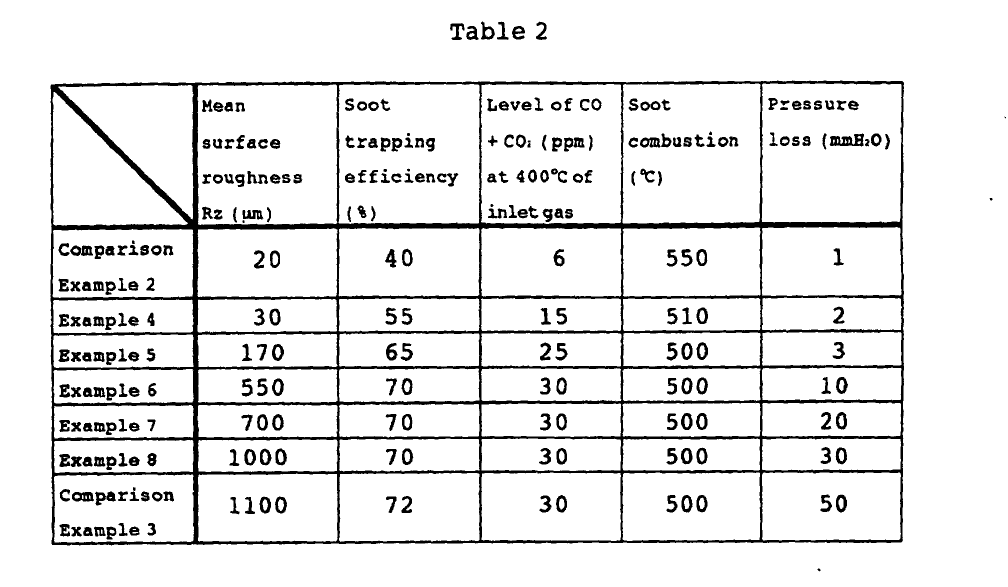

Table 2 indicates that the soot trapping efficiency and the pressure loss were not affected by the immobilization of the catalyst but the soot combustion efficiency was improved. More specifically, the level of CO + CO₂ at the inlet gas temperature of 400 °C was increased to 30 ppm when the mean surface roughness Rz was above 550 µm, while the soot combustion peak temperature was lowered to 500 °C. This is due to the fact that the contact area between soot and the catalyst was enlarged at a larger surface roughness level of a filter, whereby the effects of the catalyst were exerted better.

### Example 9

By using the process C, a particulate filter of wall flow type having trapping chambers and connecting pores was prepared. More specifically, alumina of a mean grain size of 1.2 µm, kaolin of a mean grain size of 1.0 µm, and talc of a mean grain size of 40 µm as starting materials were individually weighed so that alumina, kaolin and talc might be at 15 wt %, 40 wt % and 45 wt %, respectively, and they were mixed together (referred to as "cordierite composition powder B" hereinafter).

Then, 64 wt % of the cordierite composition powder B and 36 wt % of a graphite particle of a mean grain size of 200 µm as a pore-forming material were admixed, and 10 wt % of a binder (trade name of Cerander, YB-133) and 30 wt % of water were added to the total weight of the admixture and kneaded. The blend was prepared into a molded article of a honeycomb shape with a 35-mm diameter and a 50-mm length and a cross section of each honeycomb being 6.25 mm², by extrusion molding. The resulting molded article was then defatted, prior to calcination under 1,440 °C × 2 hours. The cell inlet and outlet of the honeycomb were alternately sealed, to prepare a particulate filter of wall flow type.

As shown in Fig. 3, a great number of trapping chambers 34 of a mean diameter of 180 µm as generated through the combustion of graphite particles were formed inside the base material of the resulting particulate filter, and the individual trapping chambers 34 were not only three-dimensionally communicated together but also were linked together through a plurality of connecting pores 36 of a mean diameter of 20 µm, as formed through the melting of crude talc.

### Comparison Example 4

Following the same procedures as in Example 9 except for the use of talc of a mean grain size of 1.4 µm, a particulate filter of wall flow type was prepared. A great number of trapping chambers 34 of a mean diameter of 180 µm as generated through the combustion of graphite particles were formed inside the base material of the resulting particulate filter, but no connecting pores 36 were formed inside the base material 32 comprising cordierite, so the individual trapping chambers 34 were three-dimensionally communicated together in a simple manner.

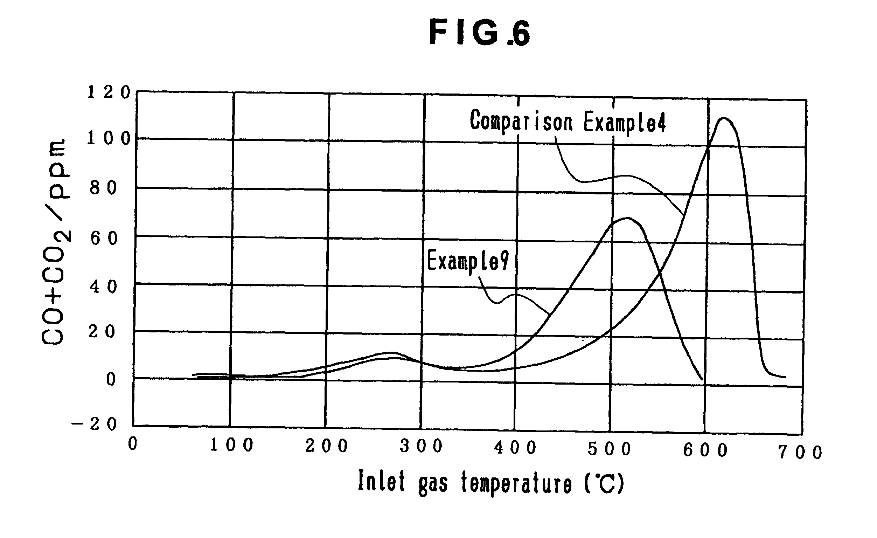

A combustion test of the particulate filters recovered in Example 9 and Comparison Example 4 was conducted. The test conditions were the same as in Example 1. The results are shown in Fig. 6.

In Comparison Example 4 with no connecting pores, the level of CO + CO₂ in the exhaust gas from the particulate filter was gradually increased at the inlet gas temperature just above 400 °C. When the inlet gas temperature was above 500 °C, additionally, the level of CO + CO₂ was rapidly increased to reach its peak when the inlet gas temperature was 620 °C. The level of CO + CO₂ then was 110 ppm.

In Example 9 wherein the individual trapping chambers were linked together via the connecting pores, in contrast, the level of CO + CO₂ in the exhaust gas showed gradual increase, starting just when the inlet gas temperature was a relatively low temperature of about 350 °C. Additionally, the level of CO + CO₂ in the exhaust gas was higher than the level in Comparison Example 4, when the inlet gas temperature was within a range of 300°C to 550 °C. When the inlet gas temperature was above 550 °C, furthermore, the level of CO + CO₂ was adversely lower than the level in Comparison Example 4; the inlet gas temperature was lowered to 520 °C when the level of CO + CO₂ reached the peak. Additionally, the level of CO + CO₂ then was lowered to 68 ppm.

Following the same procedures as in Example 4, the soot trapping efficiency and pressure loss of the particulate filters recovered in Example 9 and Comparison Example 4 were measured. Consequently, the soot trapping efficiency was 95 % in Example 9 with connecting pores arranged, but the soot trapping efficiency was 98 % in Comparison Example 4 with no connecting pores arranged. The trapping efficiency was slightly reduced due to the arrangement of such connecting pores, but the difference was not practically problematic. Furthermore, the pressure loss was 30 mmH₂O in Example 9, while the pressure loss was 60 mmH₂O in Comparison Example 4, which indicates that the arrangement of the connecting pores halved the pressure loss.

The aforementioned results indicate that a particulate filter with higher soot combustion efficiency with no reduction of the soot trapping efficiency and with less pressure loss can be produced, if the filter is of a structure such that trapping chambers are linked together through a plurality of connecting pores.

### Example 10

By using the process E, a particulate filter of wall flow type and with a heat insulating layer arranged on the surface of the base material and the inner wall surface of the trapping chambers was prepared. More specifically, a honeycomb sintered body of wall flow type was prepared, following the same procedures as in Example 1. Then, the resulting honeycomb sintered body was immersed in a slurry of titania (TiO₂ of a mean grain size of 0.2 µm) at a concentration of 65 wt %, followed by drying at 80 °C × 2 hours and subsequent calcination in atmosphere at 800 °C × one hour, whereby a particulate filter of wall flow type was recovered.

The mean pore diameter and porosity of the resulting particulate filter (referred to as "heat insulating material-coated filter" hereinbelow) were 50 µm and 60 %, respectively. As shown in Fig. 7, heat insulating layer 66 comprising TiO₂ of a thickness of 1.0 µm was formed on the surface of the base material 62 and the inner wall surface of the trapping chambers 64.

### Example 11

By using the process F, a particulate filter of wall flow type and with a high porosity heat insulating layer arranged on the gas outlet side of the base material was prepared. More specifically, a honeycomb molded article was prepared by extrusion molding by using the same raw materials as in Example 1, which was then defatted and calcined, to prepare a honeycomb calcined body after sealing alternately the cell inlet and cell outlet.

Then, a slurry composed of 35 wt % of the cordierite composition powder A used in Example 1, 30 wt % of a graphite particle of a grain size of 5 to 20 µm, 10 wt % of a binder, 0.5 wt % of polycarboxylic acid ammonium dispersing agent and the remaining part of water was prepared, into which was immersed the aforementioned honeycomb calcined body to deposit the slurry only on the gas outlet part of the honeycomb calcined body. After drying the calcined body and further calcining the body in atmosphere under conditions of 1,400 °C × one hour, a particulate filter of wall flow type was recovered.

The mean pore diameter and porosity of the resulting particulate filter (referred to as "high porosity layer-formed filter" hereinbelow) were 50 µm and 60 %, respectively. As shown in Fig. 8, additionally, high porosity heat insulating layer 76 of a 50-µm thickness, a mean pore diameter of 10 µm and a porosity of 80 % was formed on the gas outlet part of the base material comprising cordierite.

### Comparison Example 5

Following the same procedures as in Example 10 except that the heat insulating material comprising titania was never coated on the surface of the base material and the inner wall surface of the trapping chambers, a particulate filter with no heat insulating layer (referred to as "heat insulating material non-coated filter" hereinbelow) was prepared.

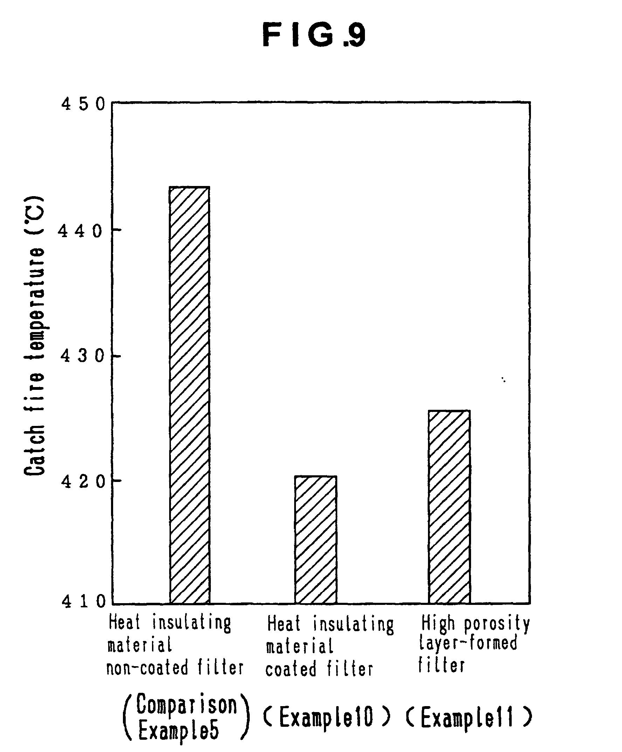

A combustion test of the particulate filters recovered in Examples 10 and 11 and Comparison Example 5 was conducted, to measure the catch fire temperature of soot. The combustion test was conducted under the same conditions as in Example 1. Additionally, the catch fire temperature was expressed as the inlet gas temperature (°C) when the level of CO + CO₂ in the exhaust gas reached 5 ppm. The results are shown in Fig. 9.

The catch fire temperature of soot on the heat insulating material non-coated filter recovered in Comparison Example 5 was 443 °C. Alternatively, the catch fire temperature of soot on the heat insulating material-coated filter recovered in Example 10 was 420 °C; the catch fire temperature on the high porosity layer formed filter recovered in Example 11 was 425 °C, which was lower by about 20 °C than the catch fire temperature of Comparison Example 5.

The aforementioned results indicate that the arrangement of a heat insulating layer in the recess parts on the surface of the base material and in the inside of the trapping chambers or the arrangement of a heat insulating layer with higher porosity than that of the base material on the gas outlet part of the base material thermally insulated the recess parts of the base material or the inside of the trapping chambers as combustion reaction areas, so that the catch fire temperature of soot was lowered.

The present invention may be embodied in other specific forms without departing from the spirit or essential characteristics thereof. For instance, the case of honeycomb filter is described in the embodiments described above, but the adjustment of the mean surface roughness Rz of the base material within a given range, the arrangement of trapping chambers and connecting pores inside the base material and the arrangement of a heat insulating layer on a part of the surface of the base material should be applicable to the formation of filter or fiber filter, whereby the same effects as in the above embodiments can be exerted.

Because the particulate filter of the present invention furthermore can trap particulates at high efficiency, particulates may satisfactorily be incinerated on an electric heater and the like while blowing air by means of a blower during the switching off of engine, instead of non-flame combustion of trapped particulates in oxygen remaining in the exhaust gas.

In the above embodiments, additionally, a honeycomb filter of wall flow type and with trapping chambers and connecting pores has been described, but trapping chambers and connecting pores may satisfactorily be arranged inside the base material of a honeycomb filter of straight flow type.

If trapping chambers and connecting pores are arranged inside the base material of a honeycomb filter of straight flow type, turbulence occurs in the flow of exhaust gas when the gas passes through the proximity of the surface of the base material, and a part of the exhaust gas infiltrates into the inside of the trapping chambers. Like the case of wall flow type, therefore, the contact frequency between the inner wall surface of the trapping chambers and particulates increases, which improves the particulate trapping efficiency and combustion efficiency.

In the aforementioned embodiments, the heat insulating material coated filter to which the process E was only applied and the high porosity layer formed filer to which the process F was only applied have been described, but the combination of the processes E and F may be satisfactory for producing a honeycomb filter of wall flow type. More specifically, a heat insulating material is coated on the surface of a base material or the inner wall surface of trapping chambers and a high porosity heat insulating layer is arranged on the gas outlet part, satisfactorily, and in that case, further improvement of the combustion efficiency can be expected.

By applying the process F, instead of coating the surface of a base material and the inner wall surface of trapping chambers with a heat insulating material with smaller thermal conductivity and smaller thermal capacity than those of the base material, a heat insulating layer with high porosity may satisfactorily be formed on the surface of the base material and the inner wall surface of the trapping chambers.

In the above embodiments, description is made about an example where titania (TiO₂, with thermal conductivity of 1.59 W/(m·K)) as a heat insulating layer was coated on a base material of cordierite (thermal conductivity of 3.0 W/(m·K)), but silica (SiO₂, with thermal conductivity of 1.38 W/(m·K)) may be used as a heat insulating layer for a base material of cordierite.

The particulate filter of the present invention can get the increase in the contact area between gas and a catalyst, by means of roughening of the mean surface roughness Rz and arrangement of trapping chambers, whereby the recess parts on the surface of the base material or the inside of the trapping chambers serve as a combustion reaction area.

If a CO oxidation catalyst, a reduction catalyst for NOx reduction, an NOx adsorbent, an HC adsorbent, a substance regulating thermal performance and the like are loaded on the surface of a base material and the inner wall surface of trapping chambers, in addition to oxidation catalysts of particulates, not only the combustion and removal of particulates but also the cleanup of NOx, HC, CO and the like can be attained. If sulfur is contained in a fuel, titanium oxides or a silica powder hardly reactive with sulfur are used as such base material and a porous zeolite selectively trapping hydrocarbon (HC) may be added, satisfactorily.

## Claims

1. A particulate filter for trapping particulates in exhaust gas and incinerating and removing the particulates, comprising a porous base material, wherein the mean surface roughness Rz of the base material is in the range of 30 to 1.000 µm,
**characterized in that**
said base material (32; 40; 50) comprises trapping chambers (34; 32a, 52a) of a size of 30 to 300 µm; and connecting pores (36; 44a; 56a) of a size of 5 to 100 µm for linking said trapping chambers together, wherein the diameter of a connecting pore is smaller than the diameter of a trapping chamber connected by said connecting pore.

2. The particulate filter according to claim 1,
where the mean surface roughness Rz of said base material (32) is in the range of 170 to 700 µm.

3. The particulate filter according to claim 1 or 2,
wherein a heat insulating layer (66, 76) is arranged at least on a part of the *surface* of said base material (62, 72).

4. The particulate filter according to claim 3, wherein said insulating layer (66, 76) has smaller thermal conductivity and smaller thermal capacity than a main component of said base material (62, 72) has.

5. The particulate filter according to claim 4, wherein said heat insulating layer (66, 76) is silica (SiO2) or titania (TiO2).

6. The particulate filter according to claim 3, wherein said heat insulating layer (66, 76) is a high porosity layer at the gas outlet part of said base material (62, 72) whose porosity is higher than that of the gas inlet part of said base material.

7. A method of producing a particulate filter according to any of claims 1 to 6, comprising the steps of:
uniformly mixing together raw material powders of alumina powder, kaolin powder, and talc powder of a larger grain size than the sizes of alumina powder and kaolin powder, and a powder of a combustible pore forming material,
molding the mixed raw material powders to form a molded article; and calcining the molded article to obtain the particulate filter,
wherein the size of the trapping chambers (34; 42; 52) is controlled by the grain size of the pore forming material and the size of the connecting pores (36; 44a; 56a) is controlled by the grain size of the talc powder.

8. A method according to claim 7, wherein the grain size of the powder of a combustible pore forming material is larger than the grain size of the talc powder.

9. A method according to claim 7 to 8, wherein carbon black is used as a combustible pore forming material.

## Patentansprüche

1. Ein Partikelfilter zum Einfangen von Partikeln in einem Abgas und zum Verbrennen und Entfernen der Partikel, der ein poröses Grundmaterial umfasst, wobei die mittlere Oberflächenrauhigkeit Rz des Grundmaterials im Bereich von 30 bis 1000 µm liegt,
**dadurch gekennzeichnet, dass** das Grundmaterial (32; 40; 50) Einfangkammern (34; 32a; 52a) mit einer Größe von 30 bis 300 µm und Verbindungsporen (36; 44a; 56a) mit einer Größe von 5 bis 100 µm zum Verbinden der Einfangkammern miteinander umfasst, wobei der Durchmesser einer Verbindungspore kleiner ist als der Durchmesser einer Einfangkammer, die durch die Verbindungspore verbunden ist.

2. Partikelfilter nach Anspruch 1, bei dem die mittlere Oberflächenrauhigkeit Rz des Grundmaterials (32) im Bereich von 170 bis 700 µm liegt.

3. Partikelfilter nach Anspruch 1 oder 2, bei dem eine Wärmeisolierschicht (66, 76) mindestens auf einem Teil der Oberfläche des Grundmaterials (62, 72) angeordnet ist.

4. Partikelfilter nach Anspruch 3, bei dem die Isolierschicht (66, 76) eine kleinere Wärmeleitfähigkeit und eine kleinere Wärmekapazität aufweist als eine Hauptkomponente des Grundmaterials (62, 72).

5. Partikelfilter nach Anspruch 4, bei dem die Wärmeisolierschicht (66, 76) Siliciumdioxid (SiO₂) oder Titandioxid (TiO₂) ist.

6. Partikelfilter nach Anspruch 3, bei dem die Wärmeisolierschicht (66, 76) eine hochporöse Schicht am Gasauslassteil des Grundmaterials (62, 72) ist, deren Porosität höher ist als die Porosität des Gaseinlassteils des Grundmaterials.

7. Ein Verfahren zur Herstellung eines Partikelfilters nach einem der Ansprüche 1 bis 6, das die Schritte umfasst:
Gleichförmiges Zusammenmischen von Rohmaterialpulvem eines Aluminiumoxidpulvers, eines Kaolinpulvers und eines Talkpulvers, das eine größere Korngröße aufweist als das Aluminiumoxidpulver und das Kaolinpulver, und eines Pulvers eines verbrennbaren porenbildenden Materials,
Formen der gemischten Rohmaterialpulver zur Bildung eines Formgegenstands, und
Kalzinieren des Formgegenstands zur Erzeugung des Partikelfilters,
wobei die Größe der Einfangkammem (34; 42; 52) durch die Komgröße des porenbildenden Materials gesteuert wird und die Größe der Verbindungsporen (36; 44a; 56a) durch die Komgröße des Talkpulvers gesteuert wird.

8. Verfahren nach Anspruch 7, bei dem die Korngröße des Pulvers des verbrennbaren porenbildenden Materials größer ist als die Korngröße des Talkpulvers.

9. Verfahren nach Anspruch 7 oder 8, bei dem als verbrennbares porenbildendes Material Ruß verwendet wird.

## Revendications

1. Filtre de particules destiné à piéger des particules dans des gaz d'échappement et à incinérer et à éliminer les particules, comprenant une matière de base poreuse, la rugosité superficielle moyenne Rz de la matière de base étant de l'ordre de 30 à 1000 µm,
**caractérisé en ce que**
la matière (32 ; 40 ; 50) de base comprend des chambres (34 ; 32a, 52a) de piégeage d'une dimension de 30 à 300 µm ; et des pores (36 ; 44a ; 56a) de communication d'une dimension de 5 à 100 µm pour relier ensemble les chambres de piégeage, le diamètre d'un pore de communication étant plus petit que le diamètre d'une chambre de piégeage mise en communication par le pore de communication.

2. Filtre de particules suivant la revendication 1,
dans lequel la rugosité moyenne Rz de surface de la matière (32) de base est de l'ordre de 170 à 700 µm.

3. Filtre de particules suivant la revendication 1 ou 2,
dans lequel une couche (66, 76) isolante est disposée au moins sur une partie de la surface de la matière (62, 72) de base.

4. Filtre de particules suivant la revendication 3, dans lequel la couche (66, 76) isolante a une conductivité thermique et une capacité thermique plus petites qu'un élément restant de la matière (62, 72) de base.

5. Filtre de particules suivant la revendication 4, dans lequel la couche (66, 76) isolante est de la silice (SiO₂) ou de l'oxyde de titane (TiO₂).

6. Filtre de particules suivant la revendication 3, dans lequel la couche (66, 76) thermiquement isolante est une couche de grande porosité à la partie de sortie du gaz de la matière (62, 72) de base dont la porosité est plus grande que celle de la partie d'entrée du gaz de la matière de base.

7. Procédé de production d'un filtre de particules suivant l'une quelconque des revendications 1 à 6, comprenant les stades qui consistent
à mélanger ensemble uniformément des poudres de matières premières constituées de poudre d'alumine, de poudre de kaolin et de poudre de talc d'une dimension de grain plus grande que les dimensions de la poudre d'alumine et de la poudre de kaolin, et une poudre d'une matière combustible porogène,
à mouler les poudres de matières premières mélangées pour former un objet moulé ; et
à calciner l'objet moulé pour obtenir le filtre de particules,
la dimension des chambres (34 ; 42 ; 52) de piégeage étant régie par la dimension de grain de la matière porogène, et la dimension des pores (36 ; 44a ; 56a) de communication étant régie par la dimension de grain de la poudre de talc.

8. Procédé suivant la revendication 7, dans lequel la dimension de grain de la poudre d'une matière combustible porogène est supérieure à la dimension de grain de la poudre de talc.

9. Procédé suivant la revendication 7 ou 8, dans lequel on utilise du noir de carbone comme matière combustible porogène.
